# EUROPEAN PATENT APPLICATION

(11) **EP 4 776 733 A1**
(43) Date of publication of application: **15.07.2026**
(21) Application number: 24862726.7
(22) Date of filing: 30.08.2024
(51) Int. Cl.: H04W 72/232, H04W 72/0453, H04W 72/25

(54) **BASE STATION, TERMINAL, COMMUNICATION METHOD, AND PROGRAM**

(30) Priority: 08.09.2023 JP 2023146493
(71) Applicant: Canon Kabushiki Kaisha, Tokyo 146-8501 (JP)
(72) Inventor: YAMAMOTO Tetsuya, Tokyo 146-8501 (JP)
(74) Representative: Canon Europe Limited
(86) International application number: PCT/JP2024/031197
(87) International publication number: WO 2025/053074

(57) **Abstract**

A base station conforming to a Third Generation Partnership Project (3GPP) standard, wherein, in a network system where the base station performs scheduling of sidelink communication resources, the base station comprises a transmission unit configured to transmit Downlink Control Information (DCI) to a communication terminal, and wherein the DCI includes a field related to Sidelink Control Information (SCI) including information about frequency resources of a frequency band usable for sidelink communication, and a field indicating information about the frequency band usable for the sidelink communication.

## Description

### Technical Field

The present disclosure relates to a base station, a terminal, a communication method, and a program.

### Background Art

A sidelink communication method conforming to the Third Generation Partnership Project (3GPP^{®}) standard includes a sidelink communication mode for performing the scheduling of communication resources under the control of a base station (Patent Literature 1).

### Citation List

### Patent Literature

PTL 1: Japanese Unexamined Patent Application Publication (Translation of PCT Application) No. 2022-544311

### Summary of Invention

### Technical Problem

In Sidelink communication for performing the scheduling of communication resources under the control of a base station or a master station, the use of a frequency band such as the 5.9 gigahertz (GHz) band is assumed as a prerequisite. Therefore, a flexible allocation of a sidelink communication frequency band has not been possible.

The present disclosure has been embodied in view of the above-described issue. According to an aspect of the present disclosure, the present disclosure is directed to providing a mechanism for enabling the flexible allocation of a sidelink communication frequency band.

### Solution to Problem

A base station according to an aspect of the present disclosure is a base station in a network system where the scheduling of sidelink communication resources is performed by the base station. The base station includes a specification unit for specifying a frequency band to be used for sidelink communication, and a notification unit for notifying a terminal of the frequency band.

### Advantageous Effects of Invention

According to an aspect of the present disclosure, the present disclosure provides a mechanism for enabling the flexible allocation of a sidelink communication frequency band.

### Brief Description of Drawings

[Fig. 1] Fig. 1 is a block diagram illustrating a configuration of a base station.
[Fig. 2] Fig. 2 is a block diagram illustrating a software functional block of the base station.
[Fig. 3] Fig. 3 is a block diagram illustrating a configuration of a terminal.
[Fig. 4] Fig. 4 is a block diagram illustrating a software functional block of the terminal.
[Fig. 5] Fig. 5 is a configuration diagram illustrating a wireless communication system according to a first embodiment.
[Fig. 6] Fig. 6 is a sequence diagram of a base station according to the first embodiment.
[Fig. 7] Fig. 7 illustrates an example of a data structure of Sidelink Control Information (SCI) including no sidelink communication frequency band information.
[Fig. 8] Fig. 8 illustrates an example of a data structure of the SCI including sidelink communication frequency band information.
[Fig. 9] Fig. 9 is a sequence diagram of a terminal according to the first embodiment.
[Fig. 10] Fig. 10 illustrates a configuration of a wireless communication system according to a second embodiment.
[Fig. 11] Fig. 11 is a sequence diagram of a base station according to the second embodiment.
[Fig. 12] Fig. 12 illustrates examples of data structures of two different pieces of Downlink Control Information (DCI) including sidelink communication frequency band information.
[Fig. 13] Fig. 13 illustrates an example of a data structure of the DCI including sidelink communication frequency band information.
[Fig. 14] Fig. 14 is a sequence diagram of a terminal according to the second embodiment.
[Fig. 15] Fig. 15 illustrates an example of a data structure of the DCI including no sidelink communication frequency band information.
[Fig. 16] Fig. 16 is a sequence diagram of a base station according to a third embodiment.
[Fig. 17] Fig. 17 illustrates an example of a data structure of the DCI including two different pieces of the sidelink communication frequency band information.

### Description of Embodiments

### <First Embodiment>

A communication apparatus according to a first embodiment will be described in detail below with reference to the accompanying drawings.

The technical scope of the present disclosure is determined by the appended claims and is not to be limited by the following individual embodiments.

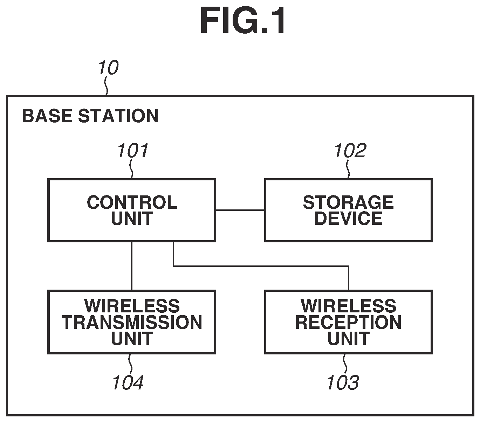

Fig. 1 illustrates an example of a functional configuration of a base station 10. A control unit 101 executes a control program stored in a storage device 102 to control the base station 10. The storage device 102 stores the control program executed by the control unit 101 and various types of information such as communication parameters. Various operations (described below) are implemented when the control unit 101 executes the control program stored in the storage device 102. A wireless reception unit 103 receives Third Generation Partnership Project (3GPP) standard signals. A wireless transmission unit 104 transmits signals conforming to the 3GPP standard.

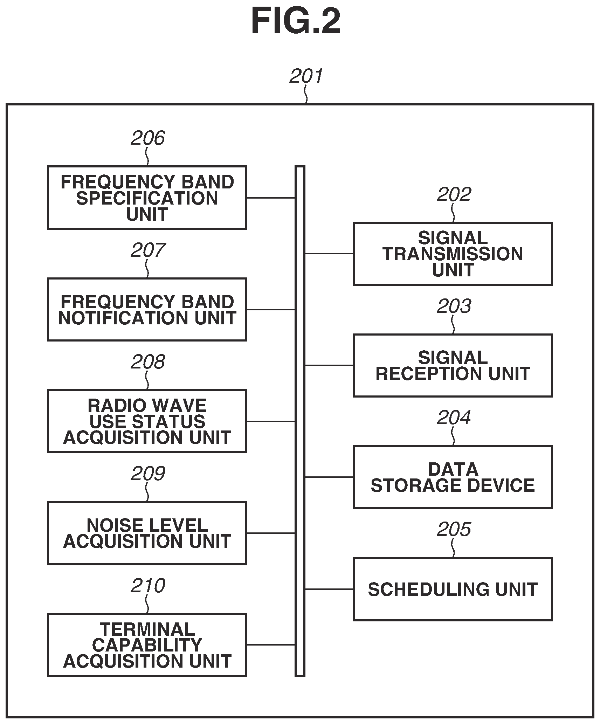

Fig. 2 is a block diagram illustrating an example of a software functional block of the base station 10. Reference numeral 201 indicates an entire software functional block.

A signal transmission unit 202 transmits signals conforming to the 3GPP standard.

A signal reception unit 203 receives signals conforming to the 3GPP standard.

A data storage device 204 stores and maintains software itself, authentication information, and other information.

A scheduling unit 205 performs the scheduling of resources to be used for sidelink communication (resource allocation).

A frequency band specification unit 206 specifies a sidelink communication frequency band (a frequency band to be used for sidelink communication). The sidelink communication frequency band may be indicated by the operating band prescribed by 3GPP. The sidelink communication frequency band may be replaced with the operating band to be used for sidelink communication. Examples of operating bands include n38 (2,570 MHz to 2,620 MHz), n47 (5,855 MHz to 5,925 MHz), and n79 (4,400 MHz to 5,000 MHz). The frequency band specification unit 206 may specify multiple frequency bands to be used for sidelink communication. The sidelink communication frequency band may be indicated by a channel number prescribed by 3GPP.

The scheduling unit 205 performs the scheduling of resources to be used for sidelink communication from among the resources for the frequency band specified by the frequency band specification unit 206.

A frequency band notification unit 207 notifies a terminal of the communication frequency band specified by the frequency band specification unit 206. The frequency band notification unit 207 may notify the terminal of multiple frequency bands to be used for sidelink communication specified by the frequency band specification unit 206.

A radio wave use status acquisition unit 208 acquires the radio wave use status of the sidelink communication frequency band.

A noise level acquisition unit 209 acquires the noise level of the sidelink communication frequency band.

A terminal capability acquisition unit 210 acquires the response capability of the terminal in the sidelink communication frequency band.

The frequency band specification unit 206 is an example of a specification unit. The frequency band notification unit 207 is an example of a notification unit.

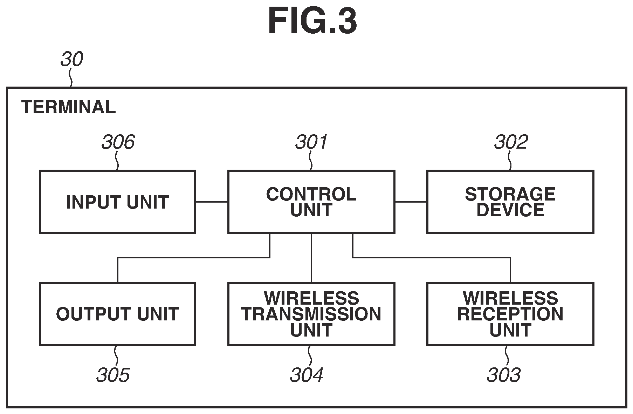

Fig. 3 illustrates an example of a functional configuration of a terminal 30. A control unit 301 executes a control program stored in the storage device 302 to control the terminal 30. The storage device 302 stores the control program to be executed by the control unit 301 and various types of information such as communication parameters. Various operations (described below) are implemented when the control unit 301 executes the control program stored in the storage device 302. A wireless reception unit 303 receives signals conforming to the 3GPP standard. A wireless transmission unit 304 transmits signals conforming to the 3GPP standard. This means that the terminal 30 functions as User Equipment (UE) capable of transmitting and receiving signals conforming to the 3GPP standard.

An output unit 305 has functions to output various types of information including visually recognizable information through a liquid crystal display (LCD), a light emitting diode (LED), and the like, and auditory information through a speaker and the like. The output unit 305 includes a function to output at least either one piece of visual information and auditory information. An input unit 306 allows a user to input various types of information and acquire sensor information.

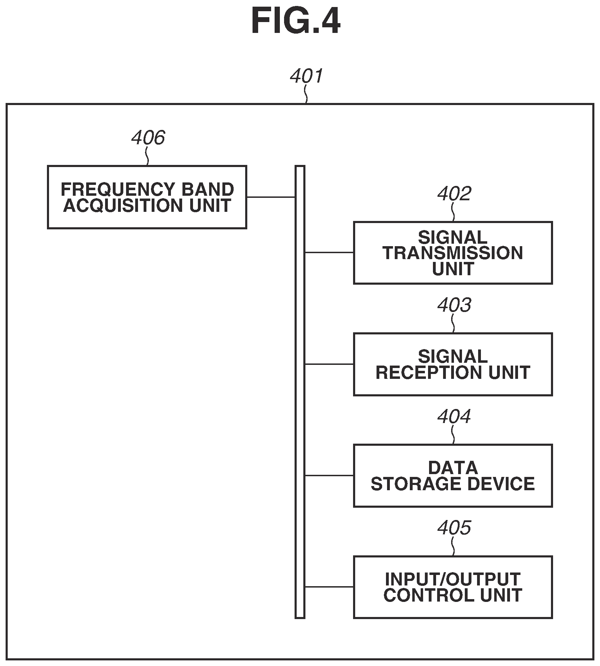

Fig. 4 is a block diagram illustrating an example of a software functional block of a terminal 30.

Reference numeral 401 refers to an entire software functional block.

A signal transmission unit 402 transmits signals conforming to the 3GPP standard. For example, the signal transmission unit 402 transmits sidelink communication signals in the sidelink communication frequency band notified from the base station 10.

A signal reception unit 403 receives signals conforming to the 3GPP standard. For example, the signal reception unit 403 receives sidelink communication signals in the sidelink communication frequency band notified from the base station 10.

The data storage device 404 stores and maintains software itself, authentication information, and other information.

An input/output control unit 405 performs control processing on the output unit 305 and the input unit 306.

The frequency band acquisition unit 406 acquires the sidelink communication frequency band from the base station 10. The frequency band acquisition unit 406 may also acquire multiple sidelink communication frequency bands from the base station 10. In this case, the signal transmission unit 402 and the signal reception unit 403 may perform the sidelink communication using multiple sidelink communication frequency bands.

The frequency band acquisition unit 406 is an example of an acquisition unit. The signal transmission unit 402 and the signal reception unit 403 are examples of communication units.

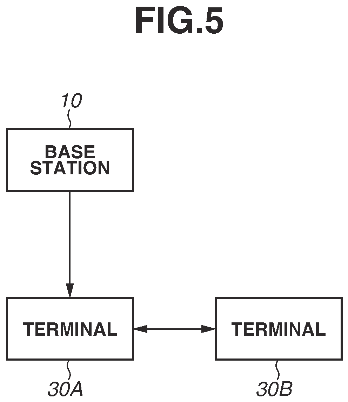

Fig. 5 illustrates an example configuration of the wireless communication system according to the present embodiment. As illustrated in Fig. 5, the wireless communication system according to the present embodiment includes the base station 10, a terminal 30A, and a terminal 30B. The wireless communication system is an example of a network system.

Although, a large number of base stations and terminals may actually exist, Fig. 5 illustrates only configurations necessary for description of the present embodiment. In the following description, each of the terminals 30A and 30B is referred to as a terminal 30 if the terminals do not need to be distinguished.

The base station 10 performs the scheduling of sidelink communication resources conforming to the 3GPP standard.

The base station 10 notifies the terminal 30A of the sidelink communication frequency band and the wireless resources to be used for the sidelink communication in the frequency band. The terminal 30A performs the sidelink communication with the terminal 30B by using the wireless resources for the frequency band notified from the base station 10. The base station 10 may transmit a similar notification not only to the terminal 30A but also to the terminal 30B. The terminals 30A and 30B may perform the sidelink communication with each other by using the notified wireless resources for the frequency band.

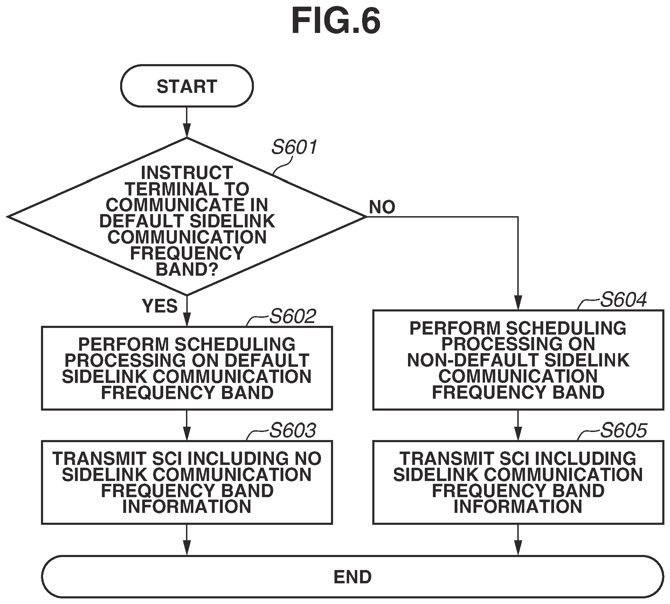

Fig. 6 is a flowchart illustrating an example of processing performed by the base station 10 for the flexible allocation of a sidelink communication frequency band. When allocating the wireless resources for the sidelink communication to the terminal 30A, the base station 10 starts the processing illustrated in Fig. 6. The control unit 101 of the base station 10 may start the processing illustrated in Fig. 6 upon reception of a sidelink communication request from the terminal 30A. Alternatively, the control unit 101 of the base station 10 may start the processing illustrated in Fig. 6 when the terminal 30A connects with the base station 10. The processing illustrated in Fig. 6 is implemented when the control unit 101 reads and executes a computer program stored in the storage device 102.

In step S601, the base station 10 determines whether to instruct the terminal 30A to communicate in the default sidelink communication frequency band. The default sidelink communication frequency band may be predetermined in the 3GPP specifications, and may be preset in the terminal 30 through a Non Access Stratum (NAS) message or a Radio Resource Control (RRC) message.

The base station 10 may determine whether to instruct the terminal 30A to communicate in the default sidelink communication frequency band, based on the radio wave use status in the default sidelink communication frequency band. As an example, the default sidelink communication frequency band is assumed to range from 5,915 to 5,925 MHz. For example, if the radio wave use status in the frequency band acquired by the radio wave use status acquisition unit 208 is less than 50% (YES in step S601), the base station 10 may determine to instruct the terminal 30A to communicate in the default sidelink communication frequency band.

The base station 10 may also determine to instruct the terminal 30A to communicate in the default sidelink communication frequency band, based on the noise level in the default sidelink communication frequency band. As an example, the default sidelink communication frequency band is assumed to range from 5,915 to 5,925 MHz. For example, the noise level of the communication frequency band acquired by the noise level acquisition unit 209 is assumed to be better than the noise level in another sidelink communication frequency band, 5,905 to 5,915 MHz. In this case, the base station 10 may determine to instruct the terminal 30A to communicate in the default sidelink communication frequency band (YES in step S601).

The base station 10 may also determine to instruct the terminal 30A to communicate in the default sidelink communication frequency band, based on the response capability of the terminal 30A in the sidelink communication frequency band. For example, the base station 10 is assumed to be able to allocate the wireless resources for the sidelink communication in the n47 and n263 bands to the terminal 30A, and the default sidelink communication frequency band is assumed to be the n47 band. In this case, if the terminal 30A does not support the sidelink communication in the n263 band, the base station 10 may determine to instruct the terminal 30A to communicate in the default sidelink communication frequency band (YES in step S601). The terminal capability acquisition unit 210 may determine which of supported sidelink communication frequency bands the terminal 30A supports, based on the terminal capability information acquired from the terminal 30A. The terminal capability information may be UE Capability Information.

If the result of the determination in step S601 is YES, in step S602, the base station 10 performs the scheduling processing on the terminal 30A in the default sidelink communication frequency band. The scheduling processing means allocating the wireless resources to be used for communication.

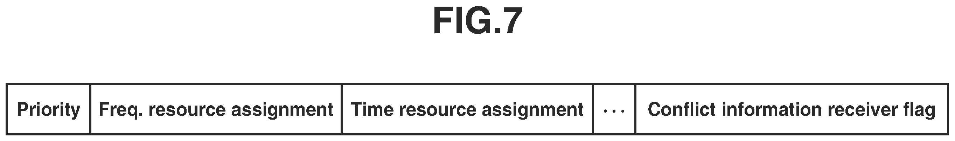

In step S603, the base station 10 transmits the Sidelink Control Information (SCI) including no sidelink communication frequency band. The SCI is information transmitted on a Physical Sidelink Control Channel (PSCCH). An example of a data structure of the SCI is illustrated in Fig. 7.

If the result of the determination in step S601 is NO, in step S604, the base station 10 performs the scheduling processing on the terminal 30A in a non-default sidelink communication frequency band.

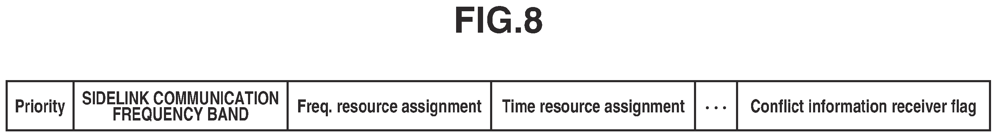

Then, in step S605, the base station 10 transmits the information about the SCI including the sidelink communication frequency band information to the terminal 30A. More specifically, the base station 10 includes information indicating the sidelink communication frequency band in the SCI information to be transmitted to the terminal to notify the terminal 30A of the sidelink communication frequency. An example of a data structure for transmitting the information about the SCI is illustrated in Fig. 8. With the data structure in Fig. 7 including only "a Freq. resource assignment" field as a piece of resource allocation information, it was impossible to distinguish between the default sidelink communication frequency band and the non-default sidelink communication frequency band. On the other hand, with the data structure illustrated in Fig. 8 including "a sidelink communication frequency band" field, it is possible to distinguish between the default sidelink communication frequency band and the non-default sidelink communication frequency band. Even if multiple non-default sidelink communication frequency bands exist, specifying a frequency band in which to allocate a sidelink communication resource to the terminal 30 becomes possible.

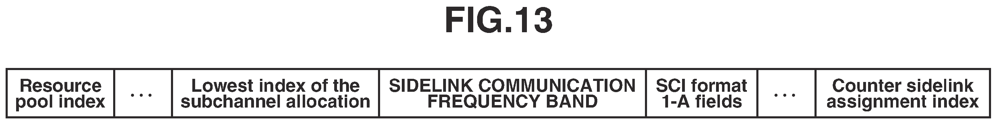

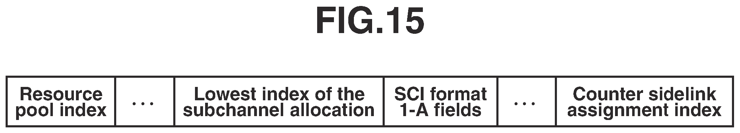

With the above-described processing in Fig. 6, the base station 10 is able to transmit the information about the SCI by including the information in Downlink Control Information (DCI). This means that the data structures in Figs. 7 and 8 may be included in SCI format 1-A fields in Fig. 15. The DCI is information to be transmitted on a Physical Downlink Control Channel (PDCCH). Figs. 7 and 8 may be replaced with Figs. 15 and 13, respectively. This means that the base station 10 may notify the terminal 30A of the sidelink communication frequency by including the information indicating the sidelink communication frequency band in the DCI. The DCI may be called DCI format3_0, may be called DCI format3_2, DCI format3_3, DCI format3_4, or DCI format3_5, may be called DCI format4_0, DCI format4_1, or DCI format4_2, and may be called DCI format2_7, DCI format2_8, or DCI format2_9.

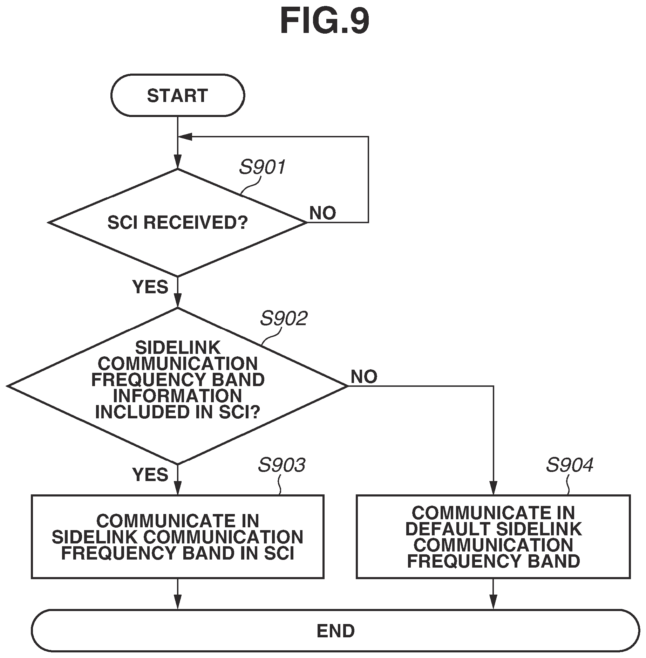

Fig. 9 is a flowchart illustrating an example of processing performed by the terminal 30A to operate according to the flexible allocation of a sidelink communication frequency band. The control unit 301 of the terminal 30A may start the processing illustrated in Fig. 9 when the wireless resources are allocated from the base station 10 and the sidelink communication becomes possible. Alternatively, the control unit 301 of the terminal 30A may start the processing illustrated in Fig. 9 upon transmission of a sidelink communication request to the base station 10. Alternatively, the control unit 301 of the terminal 30A may start the processing illustrated in Fig. 9 upon connection with the base station 10. This flowchart is implemented by the control unit 301 reading and executing a computer program stored in the storage device 302.

In step S901, the terminal 30A determines whether the information about the SCI is received from the base station 10. If the result of the determination in step S901 is NO, the processing returns to step S901.

If the result of the determination in step S901 is YES, in step S902, the terminal 30A determines whether the sidelink communication frequency band information is included in the information about the SCI. An example case where the sidelink communication frequency band information is included in the information about the SCI is illustrated in Fig. 8. On the other hand, an example case where no sidelink communication frequency band information is included in the information about the SCI is illustrated in Fig. 7.

If the result of the determination in step S902 is YES, in step S903, the terminal 30A starts the sidelink communication by using the wireless resources for the sidelink communication specified as information about the SCI, in the frequency band specified by the sidelink communication frequency band information in the information about the SCI.

If the result of the determination in step S902 is NO, in step S904, the terminal 30A starts the sidelink communication by using the wireless resources for the sidelink communication specified in the SCI, in the default sidelink communication frequency band.

Then, the terminal 30A performs the sidelink communication with the terminal 30B in the sidelink communication frequency band specified by the base station 10.

In the above-described processing in Fig. 9, the information about the SCI can be included in the DCI as described above. This means that Figs. 7 and 8 may be included in SCI format 1-A fields in Fig. 15. Figs. 7 and 8 may be replaced with Figs. 15 and 13, respectively. The DCI may be called DCI format3_0, may be called DCI format3_2, DCI format3_3, DCI format3_4, or DCI format3_5, may be called DCI format4_0, DCI format4_1, or DCI format4_2, and may be called DCI format2_7, DCI format2_8, or DCI format2_9. The detailed wireless resources for the sidelink communication may be indicated in SCI format 1-Afields in Fig. 15. In this case, the terminals 30A and 30B recognize the frequency band to perform the sidelink communication in based on the sidelink communication frequency band information. Then, for the scheduling information for the detailed wireless resources in the frequency band, the terminals 30A and 30B acquire the scheduling information from SCI format 1-A fields and identify the wireless resources to be used by the terminals 30A and 30B. Then, the terminals 30A and 30B perform the sidelink communication with each other by using the identified wireless resources.

SCI format 1-A fields may be called SCI format 1-B fields, or may be called SCI format 1-C fields or SCI format 1-D fields.

According to the above description, the base station 10 can perform the flexible allocation of a sidelink communication frequency band.

### <Second Embodiment>

According to a second embodiment, the functional configuration of the base station 10, the configuration of the software functional block of the base station 10, the functional configuration of the terminal 30, the configuration of the software functional block of the terminal 30, and the network configuration may be identical to those according to the first embodiment illustrated in Figs. 1, 2, 3 and 4.

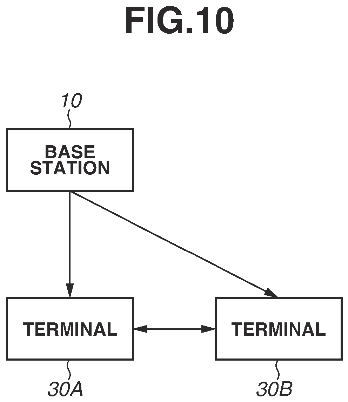

Fig. 10 illustrates an example configuration of the wireless communication system according to the second embodiment. As illustrated in Fig. 10, the wireless communication system according to the second embodiment includes the base station 10, the terminal 30A and the terminal 30B. Although, a large number of base stations and terminals may actually exist, Fig. 10 illustrates only configurations necessary for description of the second embodiment.

In the following description, the base station 10 issues a notification to the terminals 30A and 30B, and, upon reception of the notification, the terminal 30A performs the sidelink communication with the terminal 30B in a suitable sidelink communication frequency band.

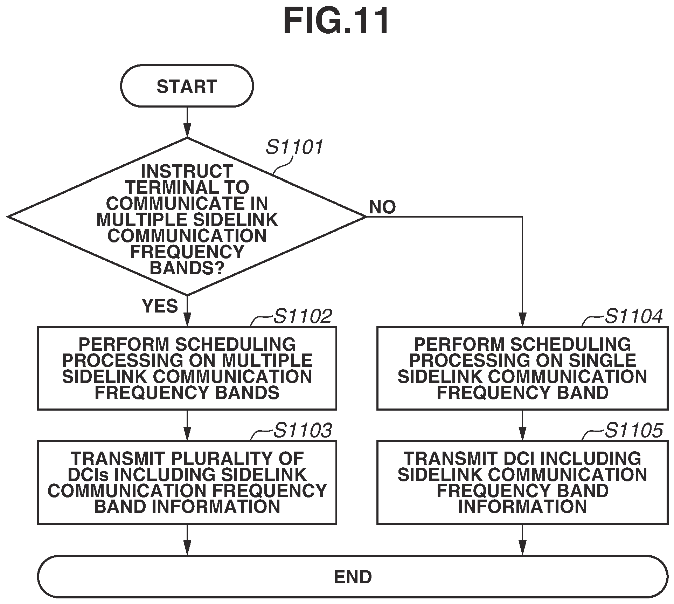

Fig. 11 is a flowchart illustrating an example of processing performed by the base station 10 to enable the sidelink communication in multiple sidelink communication frequency bands according to the second embodiment.

When allocating the wireless resources for the sidelink communication to the terminal 30A, the base station 10 starts the processing illustrated in Fig. 11. The control unit 101 of the base station 10 may start the processing illustrated in Fig. 11 upon reception of a sidelink communication request from the terminal 30A. Alternatively, the control unit 101 of the base station 10 may start the processing illustrated in Fig. 11 when the terminal 30A connects with the base station 10. The processing illustrated in Fig. 11 is implemented when the control unit 101 reads and executes a computer program stored in the storage device 102.

In step S1101, the base station 10 determines whether to instruct the terminal 30A to communicate in multiple sidelink communication frequency bands.

If the result of the determination in step S1101 is YES, in step S1102, the base station 10 performs the scheduling processing on the terminal 30A in multiple sidelink communication frequency bands.

In step S1103, the base station 10 transmits a plurality of pieces of the DCI including the sidelink communication frequency band information. More specifically, the frequency band notification unit 207 of the base station 10 notifies the terminal 30A of multiple frequency bands by including one piece of information indicating the frequency band specified by the multiple frequency bands in each of the plurality of pieces of the DCI.

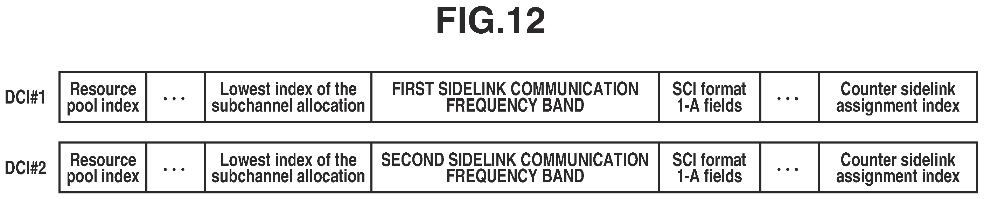

An example of a data structure of the DCI is illustrated in Fig. 12. In the example in Fig. 12, "a first sidelink communication frequency band" is set to DCI #1, and "a second sidelink communication frequency band" is set to DCI #2. DCI #1 and DCI #2 are pieces of the DCI to be transmitted to the terminal 30A. Therefore, DCI #1 and DCI #2 have a common (identical) Cyclic Redundancy Check (CRC) scrambled by using a Radio Network Temporary Identifier (RNTI) allocated to the terminal 30A. RNTI is an abbreviation of Radio Network Temporary Identifier.

DCI #1 and DCI #2 in Fig. 12 may be allocated to different resource blocks of the Physical Control Channel (PDCCH) to be used by the base station 10 to transmit the DCI to the terminal 30. Further, Fig. 12 illustrates an example of transmitting two pieces of the DCI including the sidelink communication frequency band information, but a similar format is also used when transmitting three or more pieces of the DCI.

If the result of the determination in step S1101 is NO, in step S1104, the base station 10 performs the scheduling processing on the wireless resources for the sidelink communication in a single sidelink communication frequency band.

In step S1105, the base station 10 transmits the DCI including the sidelink communication frequency band information. An example of a data structure of the DCI is illustrated in Fig. 13.

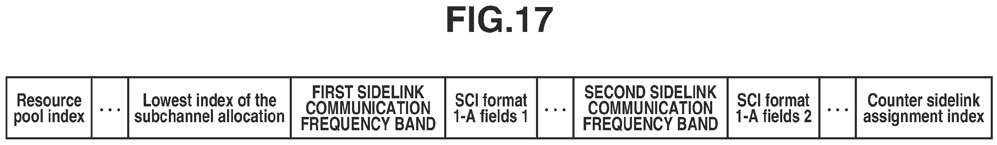

In the above-described processing, the base station 10 may notify the terminal 30A of multiple sidelink communication frequency bands by including information indicating multiple sidelink communication frequency bands in one piece of the DCI. For example, the base station 10 may include "the first sidelink communication frequency band" and "the second sidelink communication frequency band" in one piece of the DCI. This means that, in step S1103, the base station 10 may transmit the DCI including both "the first sidelink communication frequency band" and "the second sidelink communication frequency band" to the terminal 30A. An example format of the DCI is illustrated in Fig. 17.

According to the above description, the base station 10 can specify multiple sidelink communication frequency bands for the terminal 30A, and also specify the sidelink communication frequency band other than the default sidelink communication frequency band even in a case where the base station 10 is to instruct the terminal 30A to perform the sidelink communication in the single sidelink communication.

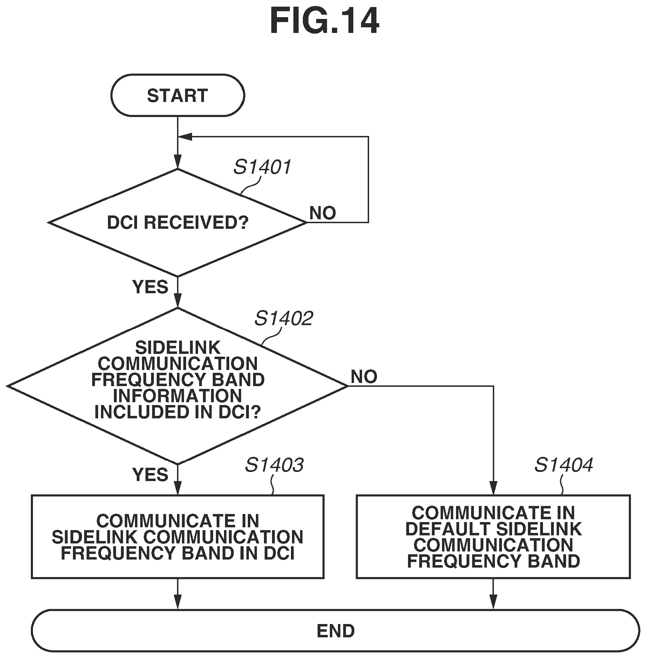

Fig. 14 is a flowchart illustrating an example of processing performed by the terminal 30A according to the second embodiment to operate according to the flexible allocation of a sidelink communication frequency band.

The control unit 301 of the terminal 30A may start the processing illustrated in Fig. 14 when wireless resources are allocated from the base station 10 and the sidelink communication becomes possible. Alternatively, the control unit 301 of the terminal 30A may start the processing illustrated in Fig. 14 upon transmission of a sidelink communication request to the base station 10. Alternatively, the control unit 301 of the terminal 30A may start the processing illustrated in Fig. 14 upon connection with the base station 10. This flowchart is implemented when the control unit 301 reads and executes a computer program stored in the storage device 302.

In step S1401, the terminal 30A determines whether the DCI is received. If the result of the determination in step S1401 is NO, the processing returns to step S1401.

If the result of the determination in step S1401 is YES, in step S1402, the terminal 30A determines whether the sidelink communication frequency band information is included in the DCI. An example of the DCI including the sidelink communication frequency band information is illustrated in Fig. 13. An example of the DCI including no sidelink communication frequency band information is illustrated in Fig. 15.

If the result of the determination in step S1402 is YES, in step S1403, the terminal 30 performs the sidelink communication by using the wireless resources for the sidelink communication frequency band specified in the DCI.

If the result of the determination in step S1402 is NO, in step S1404, the terminal 30 performs the sidelink communication by using the wireless resources for the default sidelink communication frequency band.

In steps S1403 or S1404, the terminal 30 may perform the sidelink communication with the terminal 30B by using the wireless resources for the sidelink communication frequency band specified in the DCI.

According to the above description, the terminal 30 can perform the sidelink communication even in multiple sidelink communication frequency bands, and also communicate in the non-default sidelink communication frequency band even if the terminal 30 performs the sidelink communication in the single sidelink communication.

### <Third Embodiment>

According to a third embodiment, the functional configuration of the base station 10, the configuration of the software functional block of the base station 10, the functional configuration of the terminal 30, the configuration of the software functional block of the terminal 30, and the network configuration may be identical to those according to the first embodiment illustrated in Figs. 1, 2, 3 and 4.

In the following description, the base station 10 notifies the terminals 30A and 30B of the sidelink communication frequency band. Upon reception of the notification, the terminal 30A performs the sidelink communication with the terminal 30B in the sidelink communication frequency band specified by the base station 10.

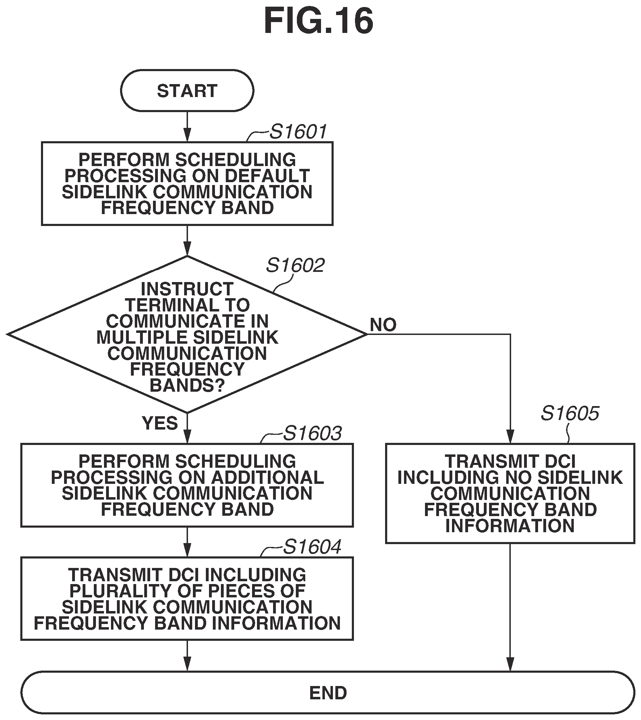

Fig. 16 is a flowchart illustrating an example of processing performed by the base station 10 to enable the sidelink communication in multiple sidelink communication frequency bands.

When allocating the wireless resources for the sidelink communication to the terminal 30A, the base station 10 starts the processing illustrated in Fig. 16. The control unit 101 of the base station 10 may start the processing illustrated in Fig. 16 upon reception of a sidelink communication request from the terminal 30A. Alternatively, the control unit 101 of the base station 10 may start the processing illustrated in Fig. 16 when the terminal 30A connects with the base station 10. The processing illustrated in Fig. 16 is implemented when the control unit 101 reads and executes a computer program stored in the storage device 102.

In step S1601, the base station 10 performs the scheduling processing in the default sidelink communication frequency band.

In step S1602, the base station 10 determines whether to instruct the terminal 30A to communicate in multiple sidelink communication frequency bands.

If the result of the determination in step S1602 is YES, in step S1603, the base station 10 performs the scheduling processing in an additional sidelink communication frequency band other than the default sidelink communication frequency band.

Next, in step S1604, the base station 10 transmits the DCI including multiple sidelink communication frequency band information. An example of the data structure is illustrated in Fig. 17. SCI format 1-A fields 1 correspond to the first sidelink communication frequency band, and SCI format 1-A fields 2 correspond to the second sidelink communication frequency band. While Fig. 17 illustrates an example of the DCI including two pieces of the sidelink communication frequency band information, the same applies to the DCI including three or more pieces of the sidelink communication frequency band information.

If the result of the determination in step S1602 is NO, in step S1605, the base station 10 transmits the DCI including no sidelink communication frequency band information.

According to the above description, specification of multiple sidelink communication frequency bands for the terminal 30A becomes possible, and also the resource scheduling on a conventional terminal becomes possible by transmission of the DCI including no sidelink communication frequency band information.

The flowchart indicating the processing performed by the terminal 30A illustrated in Fig. 14 may also be applied to the third embodiment.

The terminal 30A performs the sidelink communication with the terminal 30B in the sidelink communication frequency band determined in step S1403 or S1404.

The above-described processing enables the sidelink communication to be performed even if multiple sidelink communication frequency bands exist, and also enables the sidelink communication to be performed with the terminal 30A even if the terminal 30B is a conventional terminal.

### <Modifications>

The above-described embodiments premise a case where the base station 10 notifies the terminal 30 of the sidelink communication frequency band by using New Radio (NR) signals conforming to the 3GPP standard. However, the present embodiment is not limited thereto but may be configured to notify the terminal 30 of the sidelink communication frequency band and resources by using signals conforming to a successor standard such as the 6th Generation (6G).

Embodiments have been described above centering on an example case where the base station 10 comprehensively manages the sidelink communication frequency band and resources to be used by surrounding terminals. However, the apparatus that performs control to comprehensively manage the sidelink communication frequency band and resources to be used by the surrounding terminals is not limited to the base station 10. For example, in V2X communication, management functions may be assigned to traffic signals, surveillance cameras, road-embedded sensor nodes, and other roadside units. In this case, roadside units comprehensively manage the sidelink communication frequency band and resources to be used by the surrounding terminals, and notify the surrounding terminals of the sidelink communication frequency band and resources to be used. In this case, roadside units can be configured to notify the surrounding terminals of the sidelink communication frequency band information and resource allocation information on the Physical Sidelink Control Channel (PSCCH). The resource allocation information and the sidelink communication frequency band information can be included in the Sidelink Control Information (SCI).

As a specific method for transmitting information about the SCI and information indicating the sidelink communication frequency band, used by the base station, the above-described embodiments include the information in the DCI to be transmitted on the PDCCH. However, the embodiments are not limited thereto. For example, the embodiments can be modified to be configured to include the information about the SCI and the information indicating the sidelink communication frequency band in other information elements different from the DCI to be transmitted on the PDCCH.

### <Other Embodiments>

According to the present disclosure, a recording medium storing the program code of software for implementing the above-described functions may be supplied to a system or an apparatus, and the computer (Central Processing Unit (CPU) or Micro Processing Unit (MPU)) of the system or the apparatus may read and execute the program code stored in the recording medium. In this case, the program code itself read from the storage medium implements the above-described functions of the embodiments, and the storage medium storing the program code constitutes the present disclosure.

Examples of storage media for supplying program codes include a flexible disk, hard disk, optical disk, magneto-optical disk, compact disc read only memory (CD-ROM), compact disc recordable (CD-R), magnetic tape, nonvolatile memory card, read only memory (ROM), and digital versatile disc (DVD).

The above-described functions may be implemented not only by the computer executing the read program code but also by an Operating System (OS) operating on the computer executing part or whole of actual processing based on instructions of the program code. OS is an abbreviation of Operating System.

Further, the program code read from the storage medium is written to a memory included in a function expansion board inserted into the computer or a function expansion unit connected to the computer.

The CPU included in the function expansion board or the function expansion unit may implement the above-described functions by executing part or whole of actual processing based on instructions of the program code.

The present disclosure is not limited to the above-described embodiments but can be changed and modified in diverse ways without departing from the spirit and scope thereof. Therefore, the following claims are appended to disclose the scope of the present disclosure.

The present application claims priority based on Japanese Patent Application No. 2023-146493, filed on September 8, 2023, which is incorporated herein by reference in its entirety.

## Claims

1. A base station conforming to a Third Generation Partnership Project (3GPP) standard,
wherein, in a network system where the base station performs scheduling of sidelink communication resources, the base station comprises a transmission unit configured to transmit Downlink Control Information (DCI) to a communication terminal, and
wherein the DCI includes a field related to Sidelink Control Information (SCI) including information about frequency resources of a frequency band usable for sidelink communication, and a field indicating information about the frequency band usable for the sidelink communication.

2. The base station according to Claim 1,
wherein the transmission unit transmits a plurality of pieces of the Downlink Control Information (DCI), and
wherein each of the plurality of pieces of the DCI includes a field indicating the information about the frequency band usable for the sidelink communication.

3. The base station according to Claim 1, wherein the Downlink Control Information (DCI) includes a plurality of the fields indicating the information about the frequency band usable for the sidelink communication.

4. The base station according to any one of Claims 1 to 3, wherein the transmission unit transmits the information about the frequency band usable for the sidelink communication to the communication terminal by using a Physical Downlink Control Channel.

5. The base station according to any one of Claims 1 to 4, wherein the information about the frequency band usable for the sidelink communication is indicated by an operating band.

6. The base station according to any one of Claims 1 to 5, wherein the Downlink Control Information (DCI) includes information regarding the frequency band usable for the sidelink communication excluding a predetermined frequency band.

7. The base station according to any one of Claims 1 to 6, wherein the Downlink Control Information (DCI) includes a plurality of the fields related to the Sidelink Control Information (SCI).

8. A base station conforming to a 3GPP standard,
wherein, in a network system where the base station performs scheduling of sidelink communication resources, the base station comprises a transmission unit configured to transmit Downlink Control Information (DCI) to a communication terminal, and
wherein the DCI includes a field related to Sidelink Control Information (SCI) including information about frequency resources of a frequency band usable for sidelink communication, and the field related to the SCI includes a field indicating information about the frequency band usable for the sidelink communication.

9. The base station according to Claim 8, wherein the field related to the SCI includes a plurality of the fields indicating the information about the frequency band usable for the sidelink communication.

10. A communication terminal in a network system where a base station performs scheduling of sidelink communication resources,
wherein the communication terminal comprises a reception unit configured to receive Downlink Control Information (DCI) from the base station, and
wherein the DCI includes a field related to Sidelink Control Information (SCI) including information about frequency resources of the frequency band usable for the sidelink communication, and a field indicating information about the frequency band usable for the sidelink communication.

11. The communication terminal according to Claim 10, further comprising a communication unit configured to perform sidelink communication by using the information about the frequency band usable for the sidelink communication received by the reception unit.

12. The communication terminal according to Claim 10 or 11, wherein the reception unit receives the information about the frequency band usable for the sidelink communication on the Physical Downlink Control Channel.

13. The communication terminal according to any one of Claims 10 to 12, wherein the information about the frequency band usable for the sidelink communication is indicated by an operating band.

14. A communication method executed by a base station in a network system where the base station performs scheduling of sidelink communication resources, the method comprising:
a step of transmitting Downlink Control Information (DCI) to a communication terminal,
wherein the DCI includes a field related to Sidelink Control Information (SCI) including information about frequency resources of a frequency band usable for sidelink communication, and a field indicating information about the frequency band usable for the sidelink communication.

15. A communication method executed by a communication terminal in a network system where a base station performs scheduling of sidelink communication resources, the method comprising
a step of receiving Downlink Control Information (DCI) from the base station,
wherein the DCI includes a field related to Sidelink Control Information (SCI) including information about frequency resources of a frequency band usable for sidelink communication, and a field indicating information about the frequency band usable for the sidelink communication.

16. A program for causing a computer to function as the base station according to any one of Claims 1 to 9.
